# EUROPÄISCHE PATENTSCHRIFT

(11) **EP 2 711 117 B1**
(45) Veröffentlichungstag und Bekanntmachung des Hinweises auf die Patenterteilung: **25.07.2018**
(21) Anmeldenummer: 13183515.9
(22) Anmeldetag: 09.09.2013
(51) Int. Cl.: B23D 59/02

(54) **Schneidvorrichtung mit einer Spritzschutzeinrichtung und Verfahren zum Schneiden von Werkstücken**
Cutting device with a splash guard and method for cutting workpieces
Dispositif de coupe doté d'un dispositif de protection contre les projections et procédé de coupe de pièces à usiner

(30) Priorität: 19.09.2012 DE 102012108813
(43) Veröffentlichungstag der Anmeldung: 26.03.2014
(73) Patentinhaber: SDC - Steinsanierung Denkmalpflege Crailsheim GmbH & Co. KG, 74589 Satteldorf (DE); WEISS Steintechnik Handels GmbH, 93092 Barbing-Unterheising (DE)
(72) Erfinder: Rathgeb, Bertold, 74589 Satteldorf (DE); StÖhr, Wilhelm, 74589 Satteldorf (DE); StÜtz, Erik, 74589 Satteldorf (DE)
(74) Vertreter: Benninger, Johannes

(56) Entgegenhaltungen:
- DE-U1- 9 202 795
- JP-A- S59 161 223
- KR-A- 20090 099 992
- US-A- 1 185 095
- US-A- 4 676 557

## Beschreibung

Die vorliegende Erfindung betrifft eine Schneidvorrichtung mit einer Spritzschutzeinrichtung mit den Merkmalen des unabhängigen Anspruchs 1. Die Erfindung betrifft zudem ein Verfahren zum Schneiden von Werkstücken mit den Merkmalen des unabhängigen Verfahrensanspruchs 12. Zum Schneiden und Trennen von Materialien und Werkstücken mit hoher Härte wie bspw. Gesteinen werden in der Praxis üblicherweise Vorrichtungen mit rotierenden Schneidblättern verwendet. Da aufgrund der Reibung zwischen den jeweiligen Schneidblättern und den zu bearbeitenden Materialien sehr hohe Temperaturen an den Eingriffsflächen der Schneidblätter resultieren können, werden die Schneidblätter bei gängigen Schneidmaschinen während des Bearbeitens von Materialien mit Kühlflüssigkeit beaufschlagt. Aufgrund der schnellen Rotationsbewegungen der jeweiligen Schneidblätter kommt es häufig zum Verspritzen der Kühlflüssigkeit über einen relativ weiten Bereich, insbesondere in paralleler Richtung zur Schneidblattoberfläche, weshalb meist Abschirmund Spritzschutzeinrichtungen verwendet werden, um ein derartiges Spritzen zu verhindern und die Spritzflüssigkeit gezielt zu lenken und/oder abzuleiten.

Eine solche Vorrichtung zeigt bspw. die DE 297 00 356 U1. Diese bekannte Vorrichtung besitzt ein Schutz- bzw. Ablenkblech, gegen welches die Spritzflüssigkeit geführt wird. Sollen Materialien mit großem Volumen bearbeitet werden, kann es bei einer Verwendung dieser bekannten mechanischen Spritzschutzeinrichtung zu einer Behinderung des eigentlichen Bearbeitungsvorganges kommen. Dies kann insbesondere dann der Fall sein, wenn das Schneidblatt tief in das zu bearbeitende Material bzw. Werkstück eintauchen muss.

Angesichts der in der Praxis auftretenden Probleme und der bekannten Spritzschutzeinrichtungen besteht das vorrangige Ziel der Erfindung darin, eine verbesserte Vorrichtung zum Schneiden von Materialien und Werkstücken bzw. ein solches Schneidverfahren zur Verfügung zu stellen, bei denen eine Behinderung eines Arbeitsvorganges über den Spritzschutz zumindest weitgehend ausgeschlossen werden kann. Zudem soll sich die Vorrichtung durch einen einfachen und unkomplizierten Aufbau und das Verfahren durch eine einfache Handhabbarkeit und Durchführbarkeit auszeichnen.

Diese genannten Ziele der Erfindung werden durch eine Schneidvorrichtung gelöst, welche die Merkmale in dem Patentanspruch 1 umfasst. Weitere vorteilhafte Ausgestaltungen werden durch die Unteransprüche beschrieben.

Die erfindungsgemäße Schneidvorrichtung besitzt einen motorischen Antrieb sowie wenigstens ein über den motorischen Antrieb rotationsbeweglich antreibbares bzw. betriebenes scheibenförmiges Schneidwerkzeug mit umfänglich angeordneten Schneidzähnen. Wahlweise kann die Schneidvorrichtung zur Bearbeitung von Materialien und Werkstücken mit großen Volumina bzw. großen Ausdehnungen ausgebildet sein. So kann es sein, dass über die Schneidvorrichtung bspw. Gesteinsblöcke bearbeitbar sind, womit es sich um eine Steinschneidvorrichtung handeln kann. In einer bevorzugten Ausführungsform der vorliegenden Erfindung kann die Schneidvorrichtung als Schneide- und/oder Fräs- und/oder Zerspan- und/oder Schleifvorrichtung ausgebildet sein.

Vorstellbar ist hierbei, dass die Schneidvorrichtung mit einer separaten und von der Schneidvorrichtung entfernt angeordneten computergestützten Recheneinheit in Wirkverbindung steht, über welche Steuerungsbefehle an die Schneidvorrichtung weitergebbar sind. So kann die Schneidvorrichtung insbesondere unter Berücksichtigung der jeweiligen Steuerungsbefehle schwenkbar und/oder heb- und senkbar ausgebildet sein. Außerdem ist es sinnvoll, über die Steuerungsbefehle die Umdrehungsgeschwindigkeit des rotierenden Schneidwerkzeugs, seinen Vorschub während des Materialeingriffs etc. zu variieren bzw. bedarfsgerecht und werkstückabhängig steuern zu können.

Weiter besitzt die Schneidvorrichtung Mittel zur Beaufschlagung des Schneidwerkzeugs während seiner Rotationsbewegung mit Kühl- und/oder Spülmedium. Hierbei ist vorstellbar, dass die Beaufschlagung des Schneidwerkzeugs mit Kühl- und/oder Spülmedium an eine Rotationsbewegung des Schneidwerkzeugs gekoppelt ist. Bspw. kann das Kühl- und/oder Spülmedium über einen Förderkanal transportierbar sein. Der Förderkanal kann an einem freien Ende offen ausgebildet sein, so dass das Kühl- und/oder Spülmedium über das offene freie Ende an das Schneidwerkzeug weiterführbar ist. Auch kann der Förderkanal an seinem offenen freien Ende über geeignete Düsen und/oder Verteileinrichtungen verfügen, um das Schneidwerkzeug definiert mit Kühl- und/oder Spülmedium zu beaufschlagen. Das Kühl- und/oder Spülmedium kann in einer Ausführungsform der vorliegenden Erfindung durch Wasser ausgebildet sein. Denkbar ist jedoch darüber hinaus, dass dem Kühl- und/oder Spülmedium ggf. Zusätze beigemengt bzw. beigegeben werden, um die Temperaturregulierung des Schneidwerkzeugs optimieren zu können. Das Kühl- und/oder Spülmedium kann dem Schneidwerkzeug wahlweise von oben zugeführt werden, wo es drucklos und schwerkraftbedingt auf das Schneidwerkzeug abgegeben wird. Wahlweise kann das Kühl- und/oder Spülmedium dem Schneidwerkzeug auch über einen druckbeaufschlagten Strahl gezielt zugeführt werden, wobei die Mündung der Zuführleitung sinnvollerweise nahe am Außenumfang des schnell rotierenden Schneidwerkzeuges angeordnet sein kann, damit dessen Zähne das flüssige Medium mitreißen und für eine ausreichende Benetzung beim schneidenden Eingriff der Zähne mit dem Werkstück sorgen können.

Aufgrund der Zentrifugalkräfte des schnell rotierenden Schneidwerkzeuges wird das Kühl- und/oder Spülmedium nicht nur in den Eingriffsbereich mit dem Werkstück getragen, sondern auch im Bereich des Austritts der Zähne aus dem Eingriffsbereich sehr schnell in tangentialer Richtung abgegeben. Diese Schleuderbewegung resultiert aus der Rotationsbewegung des wenigstens einen Schneidwerkzeugs, so dass das Medium als Spritzmittel mehr oder weniger unkontrolliert vom Schneidwerkzeug weggeführt wird. Da die Beaufschlagung der gesamten Maschinenumgebung mit fein verteiltem Spritzmittel von erheblichem Nachteil ist, da in dem Spritzmittel körniges, insbesondere feinkörniges Material mitgetragen wird, das durch das Schneiden abgetragen wurde. Bei Benetzung von beweglichen und/oder rotierenden Maschinenteilen mit dieser Emulsion oder diesem Spritzmittel wird der Verschleiß normalerweise deutlich erhöht, da die fein verteilten Stein- und Materialkörner alle gegeneinander bewegten Wirkflächen und Lagerflächen etc. benetzen und dort zu starkem und beschleunigtem Verschleiß führen können.

Um diese Effekte so weit wie möglich zu reduzieren und um das Spritzmittel gezielt beeinflussen zu können, sieht die vorliegende Erfindung eine neuartige Spritzschutzeinrichtung vor. Diese Spritzschutzeinrichtung ist ausgebildet zur und dient der Führung eines fluiden und/oder gasförmigen Ablenkmediums gegen das Spritzmittel, insbesondere gegen das aus dem Eingriffskanal der Schneidvorrichtung mit dem Werkstück herausgeschleuderte bzw. herausspritzende Spritzmittel. Das Ablenkmedium kann bspw. durch Wasser oder eine wasserhaltige Flüssigkeit gebildet sein. Auch ist vorstellbar, dass das Ablenkmedium gasförmig und bspw. durch Luft ausgebildet ist. Denkbar sind auch Ausführungsformen, bei welchen das Ablenkmedium durch eine Mischform aus einem fluiden und einem gasförmigen Medium ausgebildet ist. Erfindungswesentlich ist die Zusammenwirkung und Ablenkung des aus dem Eingriffsbereich der Schneidvorrichtung mit dem Werkstück heraustretenden Spritzmittels mit dem Ablenkmedium, so dass die Geschwindigkeit und Wucht des Spritzmittels zumindest soweit reduziert wird, dass es nicht mehr in der gesamten Maschinenumgebung unkontrolliert verteilt wird. Im Idealfall sorgt das Ablenkmedium für die weitgehende Bindung des Spritzmittels, so dass dieses entweder als lokaler Spritzmittelnebel nach unten fällt oder im nach unten oder schräg nach unten fallenden Flüssigkeits- oder Wasservorhang aufgefangen und aufgenommen wird.

In einer bevorzugten Ausführungsform der vorliegenden Erfindung kann die Schneidvorrichtung eine Leitungseinrichtung für das Kühl- und/oder Spülmedium und das Ablenkmedium mit einem verzweigten und einem unverzweigten Leitungsabschnitt umfassen. Im Bereich des unverzweigten Leitungsabschnittes kann das Kühl- und/oder Spülmedium gemeinsam mit dem Ablenkmedium geführt sein. Im Bereich des verzweigten Leitungsabschnittes können das Kühl- und/oder Spülmedium und das Ablenkmedium getrennt und jeweils in einem separaten Förderabschnitt der Leitungseinrichtung geführt sein. Der unverzweigte Leitungsabschnitt kann bei dieser Ausführungsform dem verzweigten Leitungsabschnitt vorgeordnet sein. Das Kühl- und/oder Spülmedium und das Ablenkmedium können wahlweise jeweils durch gleiche Medien gebildet sein, so dass durch die gemeinsame Führung im unverzweigten Leitungsabschnitt kein ungewolltes Vermischen resultiert, sondern dass die Medien beliebig gemischt werden können. Die Förderabschnitte können unterschiedliche oder wahlweise jeweils ungefähr gleiche Leitungsquerschnitte aufweisen.

Weiter kann es sein, dass das Kühl- und/oder Spülmedium und das Ablenkmedium mittels einer gemeinsamen Pumpeinrichtung unter vordefinierter Druckbeaufschlagung durch die Leitungseinrichtung geführt sind. Die Pumpeinrichtung kann bspw. fester Bestandteil der Schneidvorrichtung und zusammen mit dieser bewegbar oder von der Schneidvorrichtung entkoppelt ausgebildet sein.

Bevorzugt kann das Ablenkmedium über die Spritzschutzeinrichtung winklig gegen das Spritzmittel geführt werden. So können bspw. der Winkel sowie die Druckbeaufschlagung, welche das Ablenkmedium durch die Pumpeinrichtung erfährt, derart gewählt sein, dass das Spritzmittel und das Ablenkmedium bei ihrem Aufeinandertreffen zumindest teilweise eine Zerstäubung bzw. eine Zerstreuung erfahren, wodurch ein lokaler Nebel gebildet ist, der schnell nach unten fällt und dort in einer geeigneten Auffangrichtung landen kann, ggf. zur Wiederverwendung nach einer Reinigung und/oder Filterung. In der Praxis haben sich hierfür Ausführungsformen bewährt, bei welchen unter Führung des Ablenkmediums gegen das Spritzmittel das Ablenkmedium zusammen mit dem Spritzmittel einen stumpfen Winkel einschließt. Dem angesprochenen Fachmann erschließt sich in diesem Zusammenhang, dass er ggf. das Ablenkmedium in unterschiedlichen Winkeln gegen das Spritzmittel führen kann, und dass er ggf. Versuche durchführen kann, um einen idealen Winkel für das Aufeinandertreffen des Ablenkmediums auf das Spritzmittel herauszufinden.

Darüber hinaus kann es von Vorteil sein, das Ablenkmedium als Sprühkegel und/oder Sprühstrahl gegen das Spritzmittel zu führten. Hierbei können bspw. geeignete Sprühköpfe an einem offenen Ende eines Förderabschnittes für das Ablenkmedium angeordnet sein.

Es ist vorgesehen, dass das Schneidwerkzeug während der Bearbeitung von Schneidgut in einer vordefinierten Bewegungsrichtung horizontal geführt ist, wobei das Ablenkmedium im Wesentlichen senkrecht zur Bewegungsrichtung des Schneidwerkzeugs gegen das Spritzmittel geführt ist. Darüber hinaus kann das Schneidwerkzeug ggf. Bestandteil eines Schneidkopfes sein, der je nach gewünschter Bearbeitung definiert schwenk- und/oder drehbar ausgebildet ist.

Zudem kann es sein, dass die Schneidvorrichtung an einer die Schneidvorrichtung tragenden Aufhängung positionierbar angeordnet ist. Bspw. kann die Aufhängung als Schienensystem ausgebildet sein, an welcher die Schneidvorrichtung über geeignete Rollen und/oder Lager verfahrbar aufgehängt ist.

Insbesondere betrifft die vorliegende Erfindung eine Schneidvorrichtung, welche zur Bearbeitung von Gestein über das Schneidwerkzeug ausgebildet ist. Für den angesprochenen Fachmann ist jedoch klar, dass die erfindungsgemäße Schneidvorrichtung darüber hinaus zur Bearbeitung von weiteren Materialien Verwendung finden kann.

Zur Erreichung der oben genannten Ziele der Erfindung schlägt diese weiterhin ein Verfahren zum Schneiden von Werkstücken, insbesondere von Steinen mittels eines rotierenden Schneidwerkzeuges einer Schneidvorrichtung vor. Die Schneidvorrichtung umfasst einen motorischen Antrieb zum rotationsbeweglichen Antreiben des Schneidwerkzeuges, das mit umfänglich angeordneten Schneidzähnen ausgestattet ist. Während seiner Rotationsbewegung und/oder während des Schneidens des Werkstücks wird das schnell rotierende Schneidwerkzeug mit Kühl- und/oder Spülmedium beaufschlagt, das während und resultierend aus der Rotationsbewegung des wenigstens einen Schneidwerkzeug als Spritzmittel vom Schneidwerkzeug weggeführt wird. Der Schneidvorrichtung ist eine Spritzschutzeinrichtung zugeordnet, die der Führung eines fluiden und/oder gasförmigen Ablenkmediums gegen das Spritzmittel dient. Dadurch wird das Spritzmittel gebunden und daran gehindert, in weitem Bogen vom Werkstück weggeschleudert zu werden. Bei dem Verfahren kann das Ablenkmedium über die Spritzschutzeinrichtung unter einem vorgebbaren Winkel gegen das Spritzmedium geführt werden, wobei das Ablenkmedium zusammen mit dem Spritzmittel insbesondere einen stumpfen Winkel einschließt. Wahlweise kann das Ablenkmedium auch als Sprühkegel und/oder Sprühstrahl gegen das Spritzmittel geführt werden.

Während der Bearbeitung von Schneidgut, d.h. des Werkstücks oder des Steinblocks kann das Schneidwerkzeug in einer vordefinierten Bewegungsrichtung und vorzugsweise horizontal geführt werden, wobei das Ablenkmedium im Wesentlichen senkrecht zur Bewegungsrichtung des Schneidwerkzeugs gegen das Spritzmittel geführt werden kann. Die Schneidvorrichtung kann an einer die Schneidvorrichtung tragenden Aufhängung positionierbar angeordnet sein. Außerdem kann der Volumenstrom an Kühl- und/oder Spülmedium und/oder der Volumenstrom an Ablenkmedium definiert vorgegeben werden. Das Ablenkmedium und das Kühl- und/oder Spülmedium können bspw. durch Wasser oder durch eine wasserhaltige Flüssigkeit gebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Schneidvorrichtung, wie sie bereits aus dem Stand der Technik bekannt ist.
Fig. 2 zeigt eine schematische Ansicht einer Ausführungsform einer erfindungsgemäßen Schneidvorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

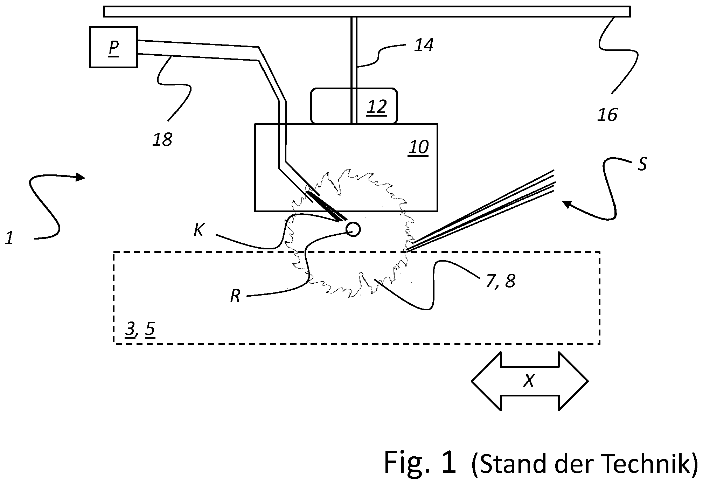

Die schematische Ansicht der Fig. 1 zeigt eine Schneidvorrichtung 1, wie sie bereits aus dem Stand der Technik bekannt ist. Die Schneidvorrichtung 1 ist ausgebildet zur Bearbeitung von Gestein 3, vorliegend einem Gesteinsblock 5. Zur Bearbeitung des Gesteins 3 bzw. des Gesteinsblocks 5 besitzt die Schneidvorrichtung 1 ein Schneidwerkzeug 7, ausgebildet als Kreissägeblatt 8. Wie in Fig. 1 zu erkennen, ist das Schneidwerkzeug 7 teilweise in einem Gehäuse 10 der Kreissäge 1 geführt. Über einen motorischen Antrieb 12 ist das Schneidwerkzeug 7 rotationsbeweglich um die Achse R antreibbar. Weiter ist eine Halteeinrichtung 14 vorhanden, über welche die Schneidvorrichtung 1 heb- und senkbar, schwenkbar sowie in Bewegungsrichtung X horizontal bewegbar an einer Aufhängung 16 angeordnet ist.

Über die Leitungseinrichtung 18 sowie unter Druckbeaufschlagung durch die Pumpeinrichtung P wird das Schneidwerkzeug 7 während seiner Rotationsbewegung mit Kühl- und/oder Spülmedium K beaufschlagt. Hierdurch resultiert ein Spritzvorgang, bei welchem das Kühl- und/oder Spülmedium K als Spritzmittel S vom Schneidwerkzeug 7 weggeführt wird. Wie es die Fig. 1 schematisch andeutet, wird das Spritzmittel S hierbei in relativ scharfem, aber sich öffnendem Strahl mit hoher Geschwindigkeit vom Werkstück 3, 5 weggeschleudert und in der gesamten Maschinenumgebung verteilt.

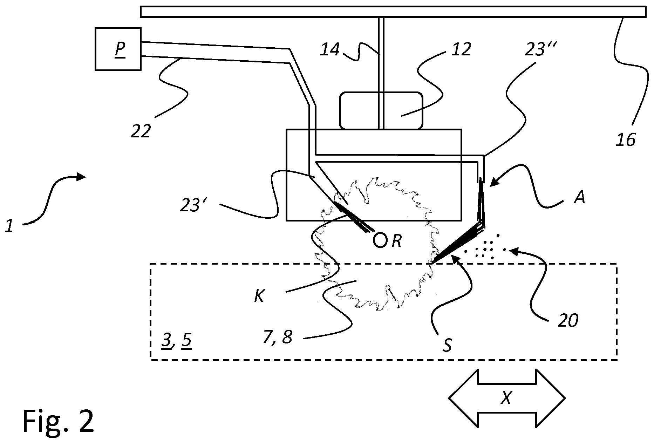

Die schematische Ansicht der Fig. 2 zeigt eine Ausführungsvariante einer erfindungsgemäßen Schneidvorrichtung 1. Wie in Fig. 1 bereits beschrieben, besitzt die Schneidvorrichtung 1 ein rotierendes Schneidwerkzeug 7, ausgebildet als schnell laufendes Kreissägeblatt 8. Über den motorischen Antrieb 12 ist das Schneidwerkzeug 7 rotationsbeweglich um die Achse R antreibbar.

Durch die Beaufschlagung des Schneidwerkzeugs 7 mit Kühl- und/oder Spülmedium K wird dieses Kühl- und/oder Spülmedium K aufgrund der Rotationsbewegung des Schneidwerkzeugs 7 nicht nur in den Eingriffsbereich mit dem Werkstück 3, 5 gebracht, sondern auch als Spritzmittel S vom Schneidwerkzeug 7 weggeführt bzw. abgeschleudert. Um den in Fig. 1 erkennbaren Spritzvorgang weitestgehend zu unterbinden, ist erfindungsgemäß eine Spritzschutzeinrichtung vorgesehen, welche sich im gezeigten Ausführungsbeispiel aus einem zweiten Förderabschnitt 23", einem unverzweigten Leitungsabschnitt 22 sowie der Pumpeinrichtung P zusammensetzt. Über die Pumpeinrichtung P wird hierbei Ablenkmedium A zunächst über den unverzweigten Leitungsabschnitt 22 nachfolgend über den zweiten Förderabschnitt 23" winklig gegen das Spritzmittel S geführt. Die definierte Druckbeaufschlagung über die Pumpeinrichtung P sowie die winklige Führung des Ablenkmediums A zum Spritzmittel S sind hierbei derart gewählt, dass beim Zusammentreffen des Spritzmittels S mit dem Ablenkmedium A eine partielle Zerstäubung 20 des Ablenkmediums A und des Spritzmittels S auftritt. Weiter wird das Spritzmittel S durch das Ablenkmedium A in Richtung eines Sägetisches (nicht dargestellt) nach unten abgelenkt. Der Sägetisch trägt hierbei das Gestein 3 bzw. den Gesteinsblock 5.

Es kann hierbei vorgesehen sein, dass das Ablenkmedium A und das Spritzmittel S nachfolgend durch die Pumpeinrichtung P gefördert werden können und anschließend als Kühl- und/oder Spülmittel K und/oder als Ablenkmedium A wiederverwendet werden. Da durch die beschriebene gezielt Ablenkung des Kühl- und/oder Spülmediums K mittels des Ablenkmediums A das Kühl- und/oder Spülmedium K nicht ungezielt auf weitere Komponenten trifft, kann eine zusätzliche Verunreinigung des Kühl- und/oder Spülmediums ausgeschlossen werden. Auch kann hierdurch eine Beeinträchtigung der Schneidvorrichtung 1 und/oder weiterer im Bereich der Schneidvorrichtung 1 angeordneter Komponenten aufgrund von auf die Schneidvorrichtung 1 oder auf die weiteren Komponenten treffendes Spritzmittel ausgeschlossen werden. Das Kühl- und/oder Spülmedium K sowie das Ablenkmedium A sind somit über die Pumpeinrichtung P bei Rotationsbewegung des Schneidwerkzeugs 7 im Kreislauf geführt.

Zudem ist erkennbar, dass der zentrale Leitungsabschnitt 22 in den zweiten Förderabschnitt 23" und einen ersten Förderabschnitt 23' verzweigt. Somit wird das Kühlmedium K und das Ablenkmedium A gemeinsam in dem zentralen Leitungsabschnitt 22 geführt. Sowohl das Kühlmedium K als auch das Ablenkmedium A können demnach identisch und durch Wasser ausgebildet sein. Es ist hierbei auch erkennbar, dass eine Druckbeaufschlagung des Kühlmediums K durch die Pumpeinrichtung P an eine Druckbeaufschlagung des Ablenkmediums A gekoppelt ist. Gleichzeitig ist eine Druckbeaufschlagung des Ablenkmediums A an eine Druckbeaufschlagung des Kühlmediums K gekoppelt.

Die Erfindung trägt somit zu einer erheblichen Verschleißreduzierung bei allen bewegten Komponenten der Schneidvorrichtung 1 bei, die nicht unmittelbar den Eingriffsbereich des Kreissägeblatts 8 mit dem Werkstück 3, 5 betreffen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Schneidvorrichtung
3 Gestein
5 Gesteinsblock
7 Schneidwerkzeug
8 Kreissägeblatt
10 Gehäuse
12 Motor
14 Halteeinrichtung
16 Aufhängung
18 Leitungseinrichtung
20 Zerstäubung
22 Zentraler Leitungsabschnitt
23 Förderabschnitt
A Ablenkmedium
K Kühl- und/oder Spülmedium
P Pumpeinrichtung
R Rotationsachse
S Spritzmittel
X Bewegungsrichtung

## Patentansprüche

1. Schneidvorrichtung (1) mit einem motorischen Antrieb (12), wenigstens einem über den motorischen Antrieb (12) rotationsbeweglich antreibbaren scheibenförmigen Schneidwerkzeug (7) mit umfänglich angeordneten Schneidzähnen sowie Mittel (P, 22, 23') zur Beaufschlagung des Schneidwerkzeugs während seiner Rotationsbewegung mit Kühl- und/oder Spülmedium (K), welches Kühl- und/oder Spülmedium (K) aus der Rotationsbewegung des wenigstens einen Schneidwerkzeug (7) resultierend als Spritzmittel (S) vom Schneidwerkzeug (7) weggeführt wird, wobei die Schneidvorrichtung (1) eine Spritzschutzeinrichtung (P, 22, 23"), ausgebildet zur Führung eines fluiden und/oder gasförmigen Ablenkmediums (A) gegen das Spritzmittel (S), aufweist, und bei welcher das Schneidwerkzeug (7) während der Bearbeitung von Schneidgut (3, 5) in einer vordefinierten Bewegungsrichtung (X) horizontal geführt ist, wobei das Ablenkmedium (A) im Wesentlichen senkrecht zur Bewegungsrichtung des Schneidwerkzeugs (7) gegen das Spritzmittel (S) geführt ist.

2. Schneidvorrichtung (1) nach Anspruch 1, die eine Leitungseinrichtung für das Kühl- und/oder Spülmedium (K) und das Ablenkmedium (A) mit einem verzweigten und einem unverzweigten Leitungsabschnitt (22) umfasst, wobei zumindest im Bereich des unverzweigten Leitungsabschnittes (22) das Kühl- und/oder Spülmedium (K) gemeinsam mit dem Ablenkmedium (A) geführt ist.

3. Schneidvorrichtung (1) nach Anspruch 1 oder 2, die eine Leitungseinrichtung für das Kühl- und/oder Spülmedium (K) und das Ablenkmedium (A) mit einem verzweigten und einem unverzweigten Leitungsabschnitt (22) umfasst, wobei zumindest im Bereich des verzweigten Leitungsabschnittes das Kühl- und/oder Spülmedium (K) und das Ablenkmedium (A) getrennt und jeweils in einem separaten Förderabschnitt (23, 23') der Leitungseinrichtung geführt sind.

4. Schneidvorrichtung (1) nach Anspruch 2 oder 3, bei welcher das Kühl- und/oder Spülmedium (K) und das Ablenkmedium (A) mittels einer gemeinsamen Pumpeinrichtung (P) unter vordefinierter Druckbeaufschlagung durch die Leitungseinrichtung geführt sind.

5. Schneidvorrichtung (1) nach einem der Ansprüche 1 bis 4, bei welcher das Ablenkmedium (A) über die Spritzschutzeinrichtung winklig gegen das Spritzmedium (S) führbar ist.

6. Schneidvorrichtung (1) nach Anspruch 5, wobei bei Führung des Ablenkmediums (A) gegen das Spritzmittel (S) das Ablenkmedium (A) zusammen mit dem Spritzmittel (S) einen stumpfen Winkel einschließt.

7. Schneidvorrichtung (1) nach einem der Ansprüche 1 bis 6, bei welcher das Ablenkmedium (A) als Sprühkegel und/oder Sprühstrahl gegen das Spritzmittel (S) geführt ist.

8. Schneidvorrichtung (1) nach einem der Ansprüche 1 bis 7, bei welcher die Schneidvorrichtung (1) an einer die Schneidvorrichtung (1) tragenden Aufhängung (16) positionierbar angeordnet ist.

9. Schneidvorrichtung (1) nach einem der Ansprüche 1 bis 8, bei welcher der Volumenstrom an Kühl- und/oder Spülmedium (K) und/oder der Volumenstrom an Ablenkmedium (A) definiert vorgebbar sind.

10. Schneidvorrichtung (1) nach einem der Ansprüche 1 bis 9, bei welcher das Ablenkmedium (A) und das Kühl- und/oder Spülmedium (K) durch Wasser ausgebildet sind.

11. Schneidvorrichtung (1) nach einem der Ansprüche 1 bis 10, wobei die Schneidvorrichtung (1) zur Bearbeitung von Gestein (3) über das Schneidwerkzeug (7) ausgebildet ist.

12. Verfahren zum Schneiden von Werkstücken, insbesondere von Steinen mittels eines rotierenden Schneidwerkzeuges (7) einer Schneidvorrichtung (1) mit einem motorischen Antrieb (12) zum rotationsbeweglichen Antreiben des Schneidwerkzeuges (7), das mit umfänglich angeordneten Schneidzähnen ausgestattet ist und während seiner Rotationsbewegung und/oder während des Schneidens des Werkstücks mit Kühl- und/oder Spülmedium (K) beaufschlagt wird, das während und resultierend aus der Rotationsbewegung des wenigstens einen Schneidwerkzeug (7) als Spritzmittel (S) vom Schneidwerkzeug (7) weggeführt wird, wobei der Schneidvorrichtung (1) eine Spritzschutzeinrichtung (P, 22, 23"), ausgebildet zur Führung eines fluiden und/oder gasförmigen Ablenkmediums (A) gegen das Spritzmittel (S), zugeordnet ist und bei welchem das Schneidwerkzeug (7) während der Bearbeitung von Schneidgut (3, 5) in einer vordefinierten Bewegungsrichtung (X) horizontal geführt ist, wobei das Ablenkmedium (A) im Wesentlichen senkrecht zur Bewegungsrichtung des Schneidwerkzeugs (7) gegen das Spritzmittel (S) geführt wird.

13. Verfahren nach Anspruch 12, bei dem das Ablenkmedium (A) über die Spritzschutzeinrichtung unter einem vorgebbaren Winkel gegen das Spritzmedium (S) geführt wird, wobei das Ablenkmedium (A) zusammen mit dem Spritzmittel (S) insbesondere einen stumpfen Winkel einschließt.

14. Verfahren nach Anspruch 12 oder 13, bei dem das Ablenkmedium (A) als Sprühkegel und/oder Sprühstrahl gegen das Spritzmittel (S) geführt wird.

## Claims

1. A cutting device (1) with a motor drive (12), at least one disc-shaped cutting tool (7), which can be driven in rotation via the motor drive (12) and has cutting teeth arranged around its periphery, and means (P, 22, 23') for applying a cooling and/or flushing medium (K) to the cutting tool during its rotational movement, which cooling and/or flushing medium (K) is led away from the cutting tool (7) as a spraying medium (S) as a result of the rotational movement of the at least one cutting tool (7) wherein the cutting device (1) is provided with a spray protection unit (P, 22, 23"), designed to guide a fluid and/or gaseous deflecting medium (A) against the spraying medium (S) and wherein the cutting tool (7) is guided horizontally in a predefined direction of movement (X) during the machining of cutting material (3, 5) wherein the deflecting medium (A) is guided largely perpendicular to the direction of movement of the cutting tool (7) against the spraying medium (S).

2. The cutting device (1) as recited in claim 1 comprising a conduit unit for the cooling and/or flushing medium (K) and the deflecting medium (A) with a branched and an unbranched conduit section (22) wherein the cooling and/or flushing medium (K) is guided together with the deflecting medium (A) at least in the region of the unbranched conduit section (22).

3. The cutting device (1) as recited in claim 1 or 2 comprising a conduit unit for the cooling and/or flushing medium (K) and the deflecting medium (A) with a branched and an unbranched conduit section (22) wherein the cooling and/or flushing medium (K) and the deflecting medium (A) are separate at least in the region of the branched conduit section and are each guided in a separate conveyor section (23, 23') of the conduit unit.

4. The cutting device (1) as recited in claim 2 or 3 wherein the cooling and/or flushing medium (K) and the deflecting medium (A) are guided through the conduit unit by means of a common pump unit (P) under predefined pressurization.

5. The cutting device (1) as recited in one of the claims 1 to 4 wherein the deflecting medium (A) can be guided via the spray protection unit at an angle against the spraying medium (S).

6. The cutting device (1) as recited in claim 5 wherein when the deflecting medium (A) is guided against the spraying medium (S), the deflecting medium (A) together with the spraying medium (S) includes an obtuse angle.

7. The cutting device (1) as recited in one of the claims 1 to 6 wherein the deflecting medium (A) is guided as a spray cone and/or spray jet against the spraying medium (S).

8. The cutting device (1) as recited in one of the claims 1 to 7 wherein the cutting device (1) is positionably arranged on a suspension (16) supporting the cutting device (1).

9. The cutting device (1) as recited in one of the claims 1 to 8 wherein the volume flow of the cooling and/or flushing medium (K) and/or the volume flow of the deflecting medium (A) can be predetermined in a defined manner.

10. The cutting device (1) as recited in one of the claims 1 to 9 wherein the deflecting medium (A) and the cooling and/or flushing medium (K) are formed by water.

11. The cutting device (1) as recited in one of the claims 1 to 10 wherein the cutting device (1) is designed for working rock (3) via the cutting tool (7).

12. A method for cutting workpieces, in particular stones, by means of a rotating cutting tool (7) of a cutting device (1) with a motor drive (12) for rotationally driving the cutting tool (7), which is equipped with cutting teeth arranged around its circumference and is applied with a cooling and/or flushing medium (K) during its rotational movement and/or during cutting the workpiece, which cooling and/or flushing medium (K) is led away from the cutting tool (7) as a spraying medium (S) during and as a result of the rotational movement of the at least one cutting tool (7) wherein the cutting device (1) is provided with a spray protection unit (P, 22, 23") designed for guiding a fluid and/or gaseous deflecting medium (A) against the spraying medium (S) and wherein the cutting tool (7) is guided horizontally in a predefined direction of movement (X) during the machining of the cutting material (3, 5) wherein the deflecting medium (A) is guided substantially perpendicular to the direction of movement of the cutting tool (7) against the spraying medium (S).

13. The method as recited in claim 12 wherein the deflecting medium (A) is guided via the spray protection unit at a predeterminable angle against the spraying medium (S) wherein the deflecting medium (A) together with the spraying medium (S) includes in particular an obtuse angle.

14. The method as recited in claim 12 or 13 wherein the deflecting medium (A) is guided as a spray cone and/or spray jet against the spraying medium (S).

## Revendications

1. Dispositif de coupe (1) doté d'un entraînement motorisé (12), d'au moins un outil de coupe (7) en forme de disque entraînable en mouvement de rotation par l'entraînement motorisé (12), avec des dents de coupe agencées sur la circonférence, ainsi que moyens (P, 22, 23') pour appliquer à l'outil de coupe pendant son mouvement de rotation un fluide de refroidissement et/ou de rinçage (K), lequel fluide de refroidissement et/ou de rinçage (K) résultant du mouvement de rotation de l'au moins un outil de coupe (7) est évacué de l'outil de coupe (7) en tant que liquide d'aspersion (S), le dispositif de coupe (1) présentant un dispositif de protection contre les éclaboussures (P, 22, 23"), conçu pour guider un agent de déviation (A) fluide et/ou gazeux contre le liquide d'aspersion (S), et dans lequel dispositif l'outil de coupe (7) est, pendant le traitement de produits à couper (3, 5), guidé horizontalement dans un sens de mouvement (X) prédéfini, l'agent de déviation (A) étant guidé sensiblement perpendiculairement au sens de mouvement de l'outil de coupe (7) contre le liquide d'aspersion (S).

2. Dispositif de coupe (1) selon la revendication 1, qui comprend un système de canalisation pour le fluide de refroidissement et/ou de rinçage (K) et l'agent de déviation (A), avec un tronçon de canalisation (22) ramifié et un tronçon non ramifié, le fluide de refroidissement et/ou de rinçage (K) étant, au moins au niveau du tronçon de canalisation (22) non ramifié, guidé en commun avec l'agent de déviation (A).

3. Dispositif de coupe (1) selon la revendication 1 ou 2, qui comprend un système de canalisation pour le fluide de refroidissement et/ou de rinçage (K) et l'agent de déviation (A), avec un tronçon de canalisation (22) ramifié et un tronçon non ramifié, le fluide de refroidissement et/ou de rinçage (K) et l'agent de déviation (A) étant, au moins au niveau du tronçon de canalisation ramifié, séparés et guidés chacun dans un tronçon de convoyage (23, 23') différent du système de canalisation.

4. Dispositif de coupe (1) selon la revendication 2 ou 3, dans lequel le fluide de refroidissement et/ou de rinçage (K) et l'agent de déviation (A) sont guidés à travers le système de canalisation au moyen d'un équipement de pompage (P) commun sous application d'une pression prédéfinie.

5. Dispositif de coupe (1) selon l'une quelconque des revendications 1 à 4, dans lequel l'agent de déviation (A) peut être guidé, par le biais du dispositif de protection contre les éclaboussures, dans un angle contre le liquide d'aspersion (S).

6. Dispositif de coupe (1) selon la revendication 5, l'agent de déviation (A) prenant en commun avec l'agent d'aspersion (S) un angle obtus lors du guidage de l'agent de déviation (A) contre le fluide d'aspersion (S).

7. Dispositif de coupe (1) selon l'une quelconque des revendications 1 à 6, dans lequel l'agent de déviation (A) est guidé en tant que cône de pulvérisation et/ou jet de pulvérisation contre le liquide d'aspersion (S).

8. Dispositif de coupe (1) selon l'une quelconque des revendications 1 à 7, dans lequel le dispositif de coupe (1) est agencé pour pouvoir être positionné sur une suspension (16) portant le dispositif de coupe (1).

9. Dispositif de coupe (1) selon l'une quelconque des revendications 1 à 8, dans lequel le débit volumique de fluide de refroidissement et/ou de rinçage (K) et/ou le débit volumique d'agent de déviation (A) peuvent être prédéfinis de manière définie.

10. Dispositif de coupe (1) selon l'une quelconque des revendications 1 à 9, dans lequel l'agent de déviation (A) et le fluide de refroidissement et/ou de rinçage (K) sont formés par de l'eau.

11. Dispositif de coupe (1) selon l'une quelconque des revendications 1 à 10, le dispositif de coupe (1) étant conçu pour traiter de la pierre (3) au moyen de l'outil de coupe (7).

12. Procédé de coupe de pièces à usiner, notamment de pierres au moyen d'un outil de coupe (7) rotatif d'un dispositif de coupe (1) doté d'un entraînement motorisé (12) pour entraîner en mouvement de rotation l'outil de coupe (7) qui est équipé de dents de coupe agencées sur la circonférence et auquel est appliqué, pendant son mouvement de rotation et/ou pendant la coupe de la pièce à usiner, un fluide de refroidissement et/ou de rinçage (K), lequel est, pendant le mouvement de rotation de l'au moins un outil de coupe (7) et résultant de celui-ci, évacué de l'outil de coupe (7) en tant que liquide d'aspersion (S), un dispositif de protection contre les éclaboussures (P, 22, 23"), conçu pour guider un agent de déviation (A) fluide et/ou gazeux contre le liquide d'aspersion (S), étant associé au dispositif de coupe (1) et dans lequel procédé l'outil de coupe (7) est, pendant le traitement de produits à couper (3, 5), guidé horizontalement dans un sens de mouvement (X) prédéfini, l'agent de déviation (A) étant guidé sensiblement perpendiculairement au sens de mouvement de l'outil de coupe (7) contre le liquide d'aspersion (S).

13. Procédé selon la revendication 12, dans lequel l'agent de déviation (A) est guidé par le biais du dispositif de protection contre les éclaboussures sous un angle prédéfinissable contre le fluide d'aspersion (S), l'agent de déviation (A) prenant en commun avec le fluide d'aspersion (S) notamment un angle obtus.

14. Procédé selon la revendication 12 ou 13, dans lequel l'agent de déviation (A) est guidé en tant que cône de pulvérisation et/ou jet de pulvérisation contre le liquide d'aspersion (S).
